# FASCICULE DE BREVET EUROPEEN

(11) **EP 0 574 308 B1**
(45) Date de publication et mention de la délivrance du brevet: **10.09.1997**
(21) Numéro de dépôt: 93401465.5
(22) Date de dépôt: 09.06.1993
(51) Int. Cl.: F16H 59/04, F16H 63/46

(54) **Levier de changement de vitesses, notamment pour véhicule automobile**
Schalthebel, insbesondere für ein Kraftfahrzeug
Shiftlever, in particular for a motor vehicle

(30) Priorité: 10.06.1992 FR 9206964
(43) Date de publication de la demande: 15.12.1993
(73) Titulaire: VALEO, 75017 Paris (FR)
(72) Inventeur: Michel, Robert, F-95540 Mery Sur Oise (FR); Randriazanamparany, Vévé Roland, F-92500 Rueil Malmaison (FR); Ledamoisel, Claude, F-95550 Bessancourt (FR)
(74) Mandataire: Gamonal, Didier

(56) Documents cités:
- EP-A- 0 189 338
- EP-A- 0 399 896
- WO-A-90/02895
- FR-A- 1 129 093
- FR-A- 2 426 971
- FR-A- 2 646 815
- US-A- 3 910 388
- AUTOMOTIVE ENGINEERING vol. 93, Janvier 1985, DALLAS, TEXAS, USA 'Shift force sensor'

## Description

L'invention se rapporte à un levier de changement de vitesses, notamment pour véhicule automobile, du genre comportant des moyens de détection d'une volonté de manoeuvre de l'usager, ces moyens de détection pouvant par exemple être mis en oeuvre pour la commande automatique d'un dispositif de débrayage piloté.

On connaît un levier de changement de vitesses, du genre comportant un tronçon de manoeuvre muni d'un pommeau destiné à être actionné par l'usager, un tronçon de transmission portant ledit tronçon de manoeuvre et destiné à être relié à une timonerie de commande du dispositif de changement de vitesses et des moyens élastiques de rappel en alignement desdits tronçons. Cet agencement permet d'associer au levier de changement de vitesses des moyens de détection d'une sollicitation dudit tronçon de manoeuvre par l'usager, indiquant sa volonté de procéder à un changement de vitesses. Ces moyens de détection permettent notamment de commander un dispositif de débrayage automatique. Un tel dispositif, décrit par exemple dans le document FR-A-2 575 707 conforme au préambule de la revendication 1, permet de générer des signaux électriques, par l'intermédiaire desdits moyens de détection, à partir d'un certain seuil d'effort lorsque le levier est sollicité en l'un ou l'autre de deux sens opposés prédéterminés. Dans le dispositif antérieur, ces signaux électriques sont engendrés par une sorte d'interrupteur intégré à la structure du levier de changement de vitesses. Plus précisément, le tronçon de manoeuvre comporte un renflement métallique susceptible d'établir une liaison électrique entre deux zones de contact électrique, lorsque le levier est sollicité. L'action de manoeuvre s'effectue à l'encontre d'un ressort hélicoïdal de sorte que la volonté de manoeuvre n'est détectée qu'au delà d'un seuil d'effort exercé sur le pommeau. Ces dispositions peuvent faire apparaître des jeux de sorte que le seuil d'effort peut varier dans le temps. En outre, les contacts électriques peuvent se détériorer et on ne prend pas en compte les efforts de manoeuvre.

L'invention a pour objet un perfectionnement concernant notamment des moyens de détection plus fiables et apportant des avantages nouveaux, notamment en ce qui concerne la possibilité de détecter très rapidement une volonté de manoeuvre, une panne et aussi celle de pouvoir, à l'aide d'un ordinateur de bord, mettre en mémoire et exploiter certaines données caractéristiques du comportement habituel de l'usager pour améliorer les conditions d'élaboration du signal de commande du dispositif de débrayage. On réalise ainsi une sorte "d'apprentissage" de l'ordinateur pilotant les manoeuvres de débrayage/embrayage.

Suivant l'invention ce problème est résolu par la partie caractérisante de la revendication 1.

Les capteurs de contrainte sont des capteurs résistifs, connus en soi, dont la résistance ohmique varie en fonction de la sollicitation appliquée au capteur. Les résistances de ces capteurs sont électriquement connectées en un circuit apte à mesurer (et non plus seulement détecter) les efforts appliqués au tronçon de manoeuvre. Les blocs de matériau élastiquement compressible sont par exemple des blocs d'élastomère et leur agencement, symétriquement de part et d'autre de l'axe d'alignement, permet d'éviter tout problème de déséquilibrage du système dans le temps. Ces blocs sont précomprimés au montage en étant placés en opposition et participent donc à l'alignement des tronçons, en l'absence de sollicitation sur le pommeau. Cette précompression permet également de fixer la valeur de référence des résistances des capteurs de contrainte et de rattraper les usures. Ces résistances peuvent être connectées de façon à former une sorte de montage potentiométrique puisqu'une sollicitation du levier dans un sens provoquera l'augmentation d'une résistance et la diminution de l'autre et vice versa.

L'invention sera mieux comprise et d'autres avantages de celle-ci apparaîtront plus clairement à la lumière de la description qui va suivre d'un mode de réalisation actuellement préféré d'un levier de changement de vitesses conforme à son principe, donnée uniquement à titre d'exemple et faite en référence aux dessins annexés dans lesquels:
- la figure 1 est une vue en élévation et en coupe longitudinale de la partie supérieure du levier de changement de vitesses;
- la figure 2 est une vue analogue suivant une coupe perpendiculaire à celle de la figure 1;
- la figure 3 est une coupe III-III de la figure 1; et
- la figure 4 est une vue de détail des moyens de détection.

Sur les dessins, on a représenté un levier de changement de vitesses 10 pour véhicule automobile comportant un tronçon de manoeuvre 11 supérieur muni d'un pommeau 12 évidé, destiné à être actionné par l'usager, et un tronçon de transmission 14, inférieur, à l'extrémité duquel est monté ledit tronçon de manoeuvre.

Plus précisément, le tronçon de transmission 14, destiné à être connecté à une timonerie de commande d'un dispositif de changement de vitesses non représenté, comporte un arbre tubulaire 16 présentant une extrémité supérieure rétrécie et sur lequel est monté un embout 18, évidé axialement pour accueillir ledit arbre. Cet embout 18 présente une partie inférieure 18a tronconique terminée par des secteurs de serrage 19 dont les surfaces extérieures s'inscrivent sensiblement dans une sphère. Le pommeau 12 est, quant à lui, prolongé à sa partie inférieure par un manchon 20 entourant la partie inférieure de l'embout et présentant sensiblement la même forme que celle-ci mais des dimensions supérieures, pour laisser subsister un espace de jeu entre eux. La partie inférieure du manchon est conformée en un réceptacle annulaire 20a accueillant une rotule femelle 21 qui s'articule sur les secteurs 19 de la partie inférieure de l'embout. Un anneau extensible 22 est inséré dans un espace annulaire défini entre l'arbre tubulaire 16 et les secteurs 19, pour établir une force de serrage modérée entre les secteurs et la rotule femelle.

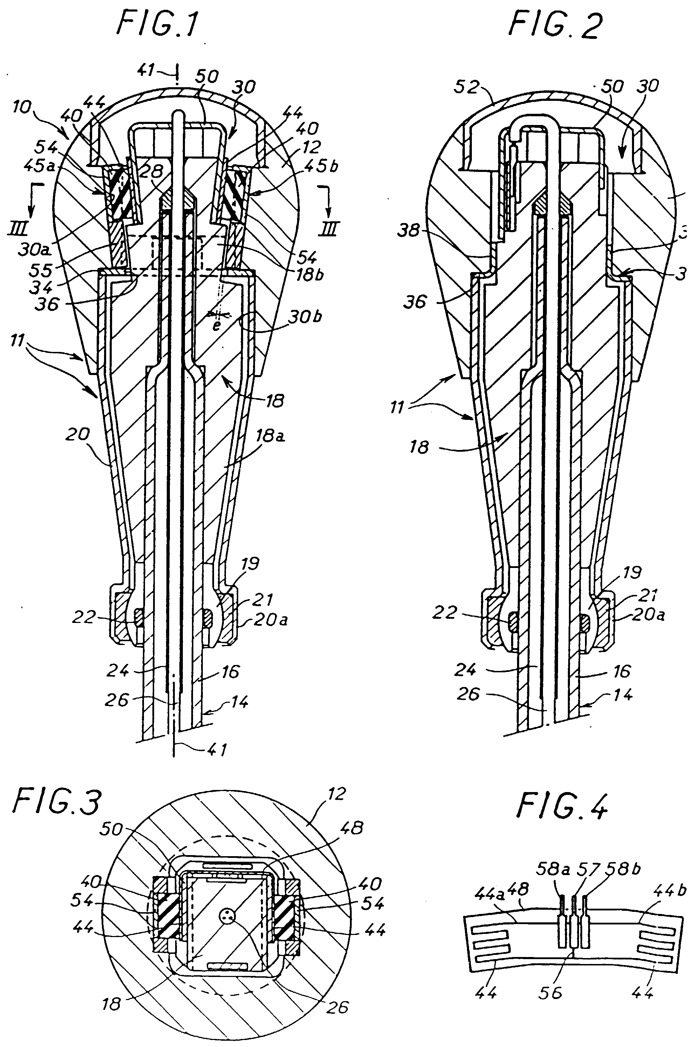

L'arbre tubulaire 16 est traversé par un tube de guidage 24 axial abritant un câble électrique 26 à trois conducteurs isolés. Un cône de blocage 28 de ce câble électrique, en matériau élastomère, est inséré entre l'extrémité supérieure de l'arbre 16 et un épaulement conique axial de l'embout 18. La partie terminale du câble électrique 26 sort axialement de l'embout 18 dans la partie supérieure de l'évidement 30 du pommeau où les fils sont raccordés à des capteurs de contrainte qui seront décrits plus loin. La partie supérieure 18b de l'embout est étagée en étant composée de plusieurs tronçons alignés à section transversale carrée ou rectangulaire, coaxiaux. En regard de cette partie, l'évidement 30 du pommeau a aussi une portion à section rectangulaire 30a plus grande prolongée par une partie cylindrique 30b dans laquelle est emboîté le manchon 20 solidaire du pommeau. Une rondelle de guidage 34 est insérée dans l'évidement 30 du pommeau et prend appui contre l'épaulement 36 créé entre ladite partie cylindrique 30b et ladite portion à section rectangulaire 30a. Cette rondelle 34 comporte une fenêtre centrale 36 rectangulaire présentant deux pattes 38 opposées, plates, rabattues parallèlement à l'axe principal de la rondelle. La distance entre les deux côtés de l'ouverture non munis desdites pattes est suffisante pour permettre un désalignement pivotant entre l'axe du tronçon de manoeuvre 12 et celui du tronçon de transmission 14, suivant deux directions opposées, comme cela apparaît sur la figure 1. En revanche, suivant deux directions opposées perpendiculaires, correspondant à la coupe de la figure 2, tout désalignement desdits tronçon de manoeuvre et tronçon de transmission est empêché par la présence des pattes 38 qui viennent s'intercaler entre le pommeau 12 et l'embout 18. En effet, l'épaisseur de ces pattes est telle que celles-ci viennent combler l'espace ménagé par construction à cet emplacement entre les surfaces latérales de l'évidement 30 du pommeau d'une part et de l'embout 18 d'autre part.

Il est donc clair que le désalignement du tronçon de manoeuvre par rapport au tronçon de transmission ne peut se produire que suivant deux directions opposées, typiquement les directions de manoeuvre avant-arrière du levier de changement de vitesses.

Le système est également équipé de moyens élastiques de rappel en alignement du tronçon de manoeuvre 11 et du tronçon de transmission 14.

Selon une caractéristique de l'invention, ces moyens élastiques de rappel comportent deux blocs de matériau élastiquement compressible 40, agencés symétriquement par rapport à l'axe d'alignement 41. Ces deux blocs sont visibles sur la figure 1. Ils sont intercalés entre des faces planes de l'évidement 30a du pommeau (définies dans des entailles, figure 3) d'une part et dans l'extrémité supérieure de l'embout 18 d'autre part, ces faces planes étant légèrement inclinées par rapport à l'axe d'alignement 41 précité pour une bonne répartition des efforts dans les blocs 40.

En outre, des moyens de détection comprennent au moins deux capteurs de contrainte 44 disposés symétriquement par rapport à l'axe d'alignement 41. Les capteurs 44 et les blocs de matériau élastiquement compressible 40 sont associés respectivement deux à deux pour former deux sous-ensembles 45a, 45b symétriques, mécaniquement interposés entre lesdits tronçons 11, 14, plus particulièrement entre les faces planes inclinées précitées. L'agencement est clairement visible sur la figure 1. Les capteurs de contrainte 44 sont ici des capteurs résistifs, connus en soi, qui présentent une résistance variable en fonction de l'effort qui leur est appliqué. Ces capteurs sont électriquement connectés en un circuit apte à mesurer des efforts exercés sur ledit tronçon de manoeuvre. Ils sont connectés aux fils électriques du câble 26 décrit ci-dessus. Chaque capteur 44 est ici accolé au bloc de matériau élastiquement compressible 40 qui lui correspond. Les capteurs 44 sont constitués par des dépôts résistifs agencés sur un même support souple 48 et ce support est conformé (plié) de façon à entourer latéralement l'extrémité du tronçon de transmission, plus particulièrement l'extrémité de l'embout 18. De cette façon, les deux capteurs résistifs sont opposés symétriquement par rapport à l'axe du tronçon de transmission 14. Le support souple est appliqué sur un support rigide 50 formant étrier lui-même monté à l'extrémité supérieure de l'embout du tronçon de transmission, dans la cavité 30 du pommeau dudit tronçon de manoeuvre. Cette cavité 30, est rebouchée à sa partie supérieure par un capuchon 52.

De plus, les blocs de matériau élastiquement compressible sont précomprimés au montage, de façon identique lorsque le tronçon de manoeuvre 11 et le tronçon de transmission 14 sont alignés. Pour ce faire, des cales de précompression 54 sont insérées respectivement entre chaque sous-ensemble 45a, 45b précité et l'un des tronçons, en l'occurrence ici la face interne de la cavité 30 du pommeau 12. Ces cales provoquent une compression prédéterminée des blocs de matériau élastiquement compressible 40 et permettent de fixer la valeur au repos des résistances desdits capteurs de contrainte 44 et aussi de rattraper les jeux en travaillant en opposition, d'où une bonne fiabilité. Des moyens de butée sont en outre agencés entre les tronçons 11, 14, au voisinage des sous-ensembles 45a, 45b définis ci-dessus, pour limiter les sollicitations appliquées à ceux-ci. Ils sont ici constitués par deux facettes opposées de la partie supérieure 18b de l'embout 18 et par deux pièces métalliques 55, logées dans les entailles définies ci-dessus accolées à la paroi interne de l'évidement 30 du pommeau 12 et découpées pour assurer le guidage des cales 54. Il en résulte que le désalignement maximum possible entre le tronçon de manoeuvre et le tronçon de transmission correspond à l'écartement e, dans chaque sens, indiqué sur la figure 1.

Dans l'exemple représenté, les capteurs résistifs sont électriquement connectés en séries avec un point commun 56 relié à un plot de raccordement 57. Ce plot est connecté à l'un des fils du câble électrique 26 tandis que les deux autres extrémités 44a, 44b des résistances (obtenues par dépôt de matériau adéquat à la surface du support souple) sont connectées respectivement à des plots de raccordement 58a, 58b eux-mêmes reliés aux deux autres fils du câble électrique 26.

Ce câble électrique 26 est connecté à un ordinateur de bord recevant d'autres informations notamment les vitesses de rotation du moteur et de l'arbre d'entrée de la boîte de vitesses, afin de piloter la manoeuvre de l'embrayage. Grâce aux blocs 40 et aux capteurs de contrainte 44 on détecte plus rapidement la volonté de manoeuvre de l'usager. Les pannes sont détectées sans avoir à manoeuvrer le levier, car par exemple, une avarie de l'un des capteurs de contrainte provoque immédiatement un déséquilibre. Le levier a également une grande durée de vie car les contacts électriques sont établis en permanence. En outre, on prend en compte les efforts, ce qui permet de savoir par avance quel rapport on engage, l'usager n'exerçant pas le même effort pour passer de première en seconde que pour passer de troisième en quatrième, par exemple. L'ordinateur enregistre ces données et fait ainsi son auto-apprentissage, permettant un gain de temps dans la manoeuvre d'embrayage. Bien entendu, l'embout 18 et le pommeau 12 sont avantageusement en matière électriquement isolante, ici en matière plastique.

On appréciera la simplicité de la solution selon l'invention par rapport à celle décrite dans le document FR-A-2 646 815 faisant appel à une double barre de flexion avec deux barres de flexion, globalement parallèles entre elles, et qui sont reliées de manière fixe à un élément de base et un élément de tête. Les barres sont plates et élastiques. L'élément de tête est placé dans le pommeau, tandis que l'élément de base est vissé sur le tronçon de transmission. Un curseur est associé à l'élément de tête et se déplace sur une voie de résistance de manière à pouvoir mesurer un déplacement analogique qui, en fonction de la courbe caractéristique des barres de flexion, permet d'en déduire un effort. Il n'est donc prévu qu'un seul capteur.

Un tel dispositif nécessite d'effectuer un déplacement important pour effectuer une bonne mesure. En outre, il faut effectuer un étalonnage pour tenir compte de la courbe caractéristique des barres de flexion.

De plus, ce dispositif est sensible aux efforts verticaux et de rotation.

Si l'on ne veut pas effectuer un déplacement important, il faut alors épaissir les barres de flexion et augmenter l'effort de manoeuvre. Ceci pose des problèmes au niveau des tolérances de fabrication pour obtenir de bonnes mesures.

Le levier selon l'invention ne présente pas ces inconvénients.

En effet, il n'y a pas besoin de procéder à un étalonnage grâce notamment à la symétrie des capteurs de contrainte et des blocs en matériau élastiquement compressible. On détecte de manière précise la sollicitation (compression) effectuée sur l'ensemble capteur - bloc compressible concerné et ce avec un effort de manoeuvre qui peut être réduit.

Ainsi les capteurs selon l'invention sont des capteurs d'appui et les signaux qu'ils délivrent sont plus élevés que ceux du document FR-A-2 646 815, en sorte qu'il n'y a pas besoin de les amplifier.

On appréciera la simplicité des sous-ensembles capteurs - blocs de matériau élastiquement compressible, selon l'invention par rapport à un dispositif à barres de flexion et la possibilité d'auto-apprentissage de l'ordinateur.

En outre, le montage est simple puisque l'on monte l'embout par enfilage sur l'extrémité de l'arbre dont l'extrémité supérieure rétrécie délimite ici deux méplats permettant une liaison en rotation de l'embout avec l'arbre par coopération de forme. Il n'y a donc pas lieu à procéder à un vissage et à un positionnement précis comme dans le sus-mentionné document FR-A-2 646 815.

Le levier selon l'invention n'est pas sensible aux efforts verticaux, grâce notamment au montage rotulant du manchon du pommeau sur l'embout.

Le levier est également pas sensible aux efforts de rotation du levier grâce notamment aux pattes 38, qui coopère avec la portée transversale rectangulaire du pommeau 12 et de l'embout 18.

On appréciera que les entailles inclinées (figures 1 et 2) pratiquées localement et symétriquement dans la portion 30a du pommeau pour montage des pièces 55, 45a, 45b sont aisément réalisables par moulage. Ces entailles facilitent le montage sans indexation desdites pièces 55, 45a, 45b.

Il en est de même des facettes inclinées étagées (fig. 1) pratiquées localement et symétriquement dans la partie supérieure de l'embout pour logement des ensembles 45a, 45b et contact avec les pièces 55.

## Revendications

1. Levier de changement de vitesses, notamment pour véhicule automobile, du genre comportant un tronçon de manoeuvre (11) muni d'un pommeau (12) destiné à être actionné par l'usager, un tronçon de transmission (14) portant de manière rotulante le tronçon de manoeuvre (11) avec possibilité de désalignement du tronçon de manoeuvre (11) par rapport au tronçon de transmission (14), des moyens élastiques de rappel (40) en alignement desdits tronçons (11,14) et des moyens de détection d'une sollicitation du tronçon de manoeuvre (11) par l'usager indiquant une volonté de manoeuvre de celui-ci, lesdits moyens de détection comprenant au moins deux capteurs (44) électriques disposés symétriquement par rapport à un axe d'alignement desdits tronçons et connectés à un ordinateur de bord afin de piloter la manoeuvre d'un embrayage, caractérisé en ce que lesdits capteurs (44) sont des capteurs de contrainte (44) du type résistif connus en soi, en ce que les résistances de ces capteurs (44) sont électriquement connectées en un circuit apte à mesurer les efforts appliqués audit tronçon de manoeuvre (11), en ce que lesdits moyens élastiques de rappel comportent deux blocs de matériau élastiquement compressible (40), tel que des blocs d'élastomère, correspondants, agencés symétriquement par rapport audit axe en étant chacun intercalés entre des faces planes ménagées en regard, d'une part, dans un évidement (30a) du pommeau (12) du tronçon de manoeuvre (11) et, d'autre part, dans un embout (18) formant l'extrémité supérieure du tronçon de transmission (14) coiffée par le pommeau (12) évidé, en ce que lesdits capteurs et lesdits blocs de matériau élastiquement compressible sont associés respectivement deux à deux pour former deux sous-ensembles (45a,45b) symétriques, mécaniquement interposés entre les faces planes précitées desdits tronçons (11,14) et en ce que lesdits blocs de matériau élastiquement compressible (40) sont précomprimés au montage, de façon identique lorsque lesdits tronçons (11,14) sont alignés.

2. Levier de changement de vitesses selon la revendication 1, caractérisé en ce que des cales de précompression (54) sont insérées respectivement entre chaque sous-ensemble précité et l'un des tronçons précités, pour provoquer une compression prédéterminée des blocs de matériau élastiquement compressible (40).

3. Levier de changement de vitesses selon la revendication 2, caractérisé en ce que les cales de précompression (54) sont insérées entre chaque sous-ensemble (45a, 45b) et la face interne de la cavité (30) du pommeau (12).

4. Levier de changement de vitesses selon la revendication 3, caractérisé en ce que chaque face plane précitée de l'évidement (30) du pommeau est définie dans une entaille découpée pour assurer le guidage de la cale de précompression associée (54).

5. Levier de changement de vitesses selon l'une quelconque des revendications 1 à 4, caractérisé en ce que les faces planes précitées de l'embout (18) sont ménagées dans la partie supérieure (18b) de l'embout (18) et en ce que ladite partie supérieure (18b) est étagée.

6. Levier de changement de vitesses selon l'une quelconque des revendications 1 à 5, caractérisé en ce que les faces planes en regard des tronçons de manoeuvre (11) et de transmission (14) sont inclinées.

7. Levier de changement de vitesses selon l'une des revendications 1 à 6, caractérisé en ce que lesdits capteurs résistifs sont constitués par des dépôts résistifs agencés sur un même support souple (48) et en ce que ce support est conformé de façon à entourer l'un desdits tronçons, par exemple l'extrémité supérieure de l'embout (18) du tronçon de transmission (14), de sorte que les deux capteurs résistifs soient opposés symétriquement par rapport à l'axe de ce tronçon.

8. Levier de changement de vitesses selon la revendication 7, caractérisé en ce que ledit support souple (48) est appliqué sur un support rigide (50) formant étrier, lui-même monté à l'extrémité supérieure de l'embout (18) dudit tronçon de transmission (14) coiffée par le pommeau (12), évidé, dudit tronçon de manoeuvre.

9. Levier de changement de vitesses selon la revendication 7 ou 8, caractérisé en ce que lesdits capteurs résistifs sont électriquement connectés en série avec un point commun (56) relié à un plot de raccordement (57). et en ce que ces capteurs sont connectés à un câble électrique (26) à trois conducteurs indépendants, l'un des conducteurs étant connecté audit plot de raccordement (57) du point commun, et les deux autres étant respectivement connectés à des plots de raccordement (58a,58b) desdits capteurs résistifs.

10. Levier de changement de vitesses selon la revendication 9, caractérisé en ce que le câble électrique (26) précité est abrité par un tube de guidage axial (24) traversant un arbre tubulaire (16) présentant une extrémité supérieure rétrécie sur laquelle est monté l'embout (18), et en ce que la partie terminale du câble électrique (26) sort de l'embout (18) dans la partie supérieure de l'évidement (30) du pommeau (12) où les fils sont raccordés auxdits capteurs (44).

11. Levier de changement de vitesses selon l'une des revendications précédentes, caractérisé en ce que des moyens de butée (18,55) sont agencés entre lesdits tronçons, au voisinage desdits sous-ensembles (45a,45b) pour limiter les sollicitations appliquées à ceux-ci.

12. Levier de changement de vitesses selon la revendication 11, caractérisé en ce que les moyens de butées sont constitués par deux facettes opposées de la partie supérieure (18b) de l'embout (18) et par deux pièces métalliques (55) logées dans les entailles découpées dans le pommeau (12) pour définition des faces planes précitées.

13. Levier de changement de vitesses selon l'une quelconque des revendications 1 à 12, caractérisé en ce que la partie supérieure (18b) de l'embout (18) est étagée en étant composée de plusieurs tronçons alignés à section transversale rectangulaire ou carré, en ce que, en regard de cette partie supérieure (18b) de l'embout (18), l'évidement (30) du pommeau (12) a aussi une portion à section rectangulaire (30a) plus grande prolongée par une portion cylindrique (30b), en ce qu'une rondelle de guidage (34) est insérée dans l'évidement (30) du pommeau et prend appui contre l'épaulement (36) créé entre ladite partie cylindrique (30b) et ladite partie à section rectangulaire (30a) et en ce que ladite rondelle (34) présente une fenêtre centrale rectangulaire présentant deux pattes (38) opposées, plates, rabattues parallèlement à l'axe principal de la rondelle (34) pour combler l'espace entre les surfaces latérales de l'évidement (30) du pommeau (12), d'une part, et de l'embout (18) d'autre part.

## Patentansprüche

1. Schalthebel, insbesondere für Kraftfahrzeuge, bestehend aus einem Betätigungsstück (11) mit einem Schaltknauf (12), der durch den Benutzer zu betätigen ist, und einem Übertragungsstück (14), an dem das besagte Betätigungsstück (11) mittels Kugelgelenklagerung angebracht ist, mit einem möglichen Versatz des Betätigungsstücks (11) im Verhältnis zum Übertragungsstück (14), sowie aus elastischen Rückstellmitteln (40), die auf die besagten Teilstücke (11, 14) ausgerichtet sind, und Mitteln zur Erfassung einer Beanspruchung des Betätigungsstücks (11) durch den Benutzer, die auf dessen Schaltabsicht schließen läßt, wobei die besagten Erfassungsmittel mindestens zwei elektrische Sensoren (44) umfassen, die symmetrisch im Verhältnis zu einer Ausrichtungsachse der besagten Teilstücke angeordnet und an einen Bordcomputer angeschlossen sind, um die Betätigung einer Kupplung zu steuern , **dadurch gekennzeichnet**, daß die besagten Sensoren (44) Beanspruchungssensoren in der Ausführung als an sich bekannte Widerstandssensoren sind, daß die Widerstände dieser Sensoren (44) elektrisch zu einem Schaltkreis geschaltet sind, der die auf das besagte Betätigungsstück (11) ausgeübten Kräfte messen kann, daß die besagten elastischen Rückstellmittel zwei entsprechende Blöcke aus elastisch zusammendrückbarem Material (40) enthalten, wie etwa Elastomerblöcke, die symmetrisch im Verhältnis zu der besagten Achse angeordnet sind, wobei sie jeweils zwischen gegenüberliegenden Flächen eingefügt sind, die einerseits in eine Aussparung (30a) des Schaltknaufs (12) des Betätigungsstücks (11) und andererseits in ein Ansatzstück (18) eingearbeitet sind, das das obere Ende des Übertragungsstücks (14) bildet, das durch den hohlen Schaltknauf (12) abgedeckt ist, daß die besagten Sensoren und die besagten Blöcke aus elastisch zusammendrückbarem Material jeweils paarweise zusammengehören, um zwei symmetrische Untergruppen (45a, 45b) zu bilden, die mechanisch zwischen den vorerwähnten ebenen Flächen der besagten Teilstücke (11, 14) eingefügt sind, und daß die besagten Blöcke aus elastisch zusammendrückbarem Material (40) beim Einbau auf identische Weise vorkomprimiert werden, wenn die besagten Teilstücke (11, 14) ausgerichtet werden.

2. Schalthebel nach Anspruch 1 , **dadurch gekennzeichnet**, daß Vorkomprimierungskeile (54) jeweils zwischen jede der vorgenannten Untergruppen und einem der vorgenannten Teilstücke eingefügt sind, um eine vorbestimmte Komprimierung der Blöcke aus elastisch zusammendrückbarem Material (40) herbeizuführen.

3. Schalthebel nach Anspruch 2 , **dadurch gekennzeichnet**, daß die Vorkomprimierungskeile (54) zwischen jede Untergruppe (45a, 45b) und der Innenfläche des Hohlraums (30) des Schaltknaufs (12) eingefügt sind.

4. Schalthebel nach Anspruch 3 , **dadurch gekennzeichnet**, daß jede vorgenannte ebene Fläche der Aussparung (30) des Schaltknaufs in einer eingeschnitten Einkerbung gebildet ist, um die Führung des zugehörigen Vorkomprimierungskeils (54) zu gewährleisten.

5. Schalthebel nach einem der Ansprüche 1 bis 4, **da** **durch gekennzeichnet**, daß die vorgenannten ebenen Flächen des Ansatzstücks (18) in den oberen Teil (18b) des Ansatzstücks (18) eingearbeitet sind und daß der besagte obere Teil (18b) abgestuft ist.

6. Schalthebel nach einem der Ansprüche 1 bis 5, **dadurch gekennzeichnet**, daß die gegenüberliegenden ebenen Flächen des Betätigungsstücks (11) und des Übertragungsstücks (14) geneigt sind.

7. Schalthebel nach einem der Ansprüche 1 bis 6, **dadurch gekennzeichnet**, daß die besagten Widerstandssensoren aus Widerstandsbeschichtungen bestehen, die auf der gleichen biegsamen Unterlage (48) aufgetragen sind, und daß diese Unterlage so gestaltet ist, daß sie eines der besagten Teilstücke umgibt, beispielsweise das obere Ende des Ansatzstücks (18) des Übertragungsstücks (14), so daß die beiden Widerstandssensoren einander symmetrisch im Verhältnis zur Achse dieses Teilstücks gegenüberliegen.

8. Schalthebel nach Anspruch 7 , **dadurch gekennzeichnet**, daß die besagte biegsame Unterlage (48) auf einer starren Unterlage (50) aufliegt, die einen Bügel bildet, der seinerseits am oberen Ende des Ansatzstücks (18) des besagten Übertragungsstücks (14) angebracht ist, das durch den hohlen Schaltknauf (12) des besagten Betätigungsstücks abgedeckt ist.

9. Schalthebel nach Anspruch 7 und 8 , **dadurch gekennzeichnet**, daß die besagten Widerstandssensoren elektrisch mit einem gemeinsamen Anschluß (56) in Reihe geschaltet sind, der mit einem Anschlußstift (57) verbunden ist, und daß diese Sensoren an ein Stromkabel (26) mit drei unabhängigen Leitern angeschlossen sind, wobei einer dieser Leiter an den besagten Anschlußstift (57) des gemeisamen Anschlusses angeschlossen ist, während die beiden anderen Leiter jeweils an Anschlußstifte (58a, 58b) der besagten Widerstandssensoren angeschlossen sind.

10. Schalthebel nach Anspruch 9 , **dadurch gekennzeichnet** , daß das vorgenannte Stromkabel (26) in einem axialen Führungsrohr (24) angeordnet ist, das durch eine rohrförmige Welle (16) hindurchgeht, die ein verengtes oberes Ende aufweist, an dem das Ansatzstück (18) angebracht ist, und daß der Endteil des Stromkabels (26) aus dem Ansatzstück (18) im oberen Teil der Aussparung (30) des Schaltknaufs (12) heraustritt, wo die Leitungsdrähte an die besagten Sensoren (44) angeschlossen sind.

11. Schalthebel nach einem der vorangehenden Ansprüche, **dadurch gekennzeichnet**, daß Anschlagmittel (18, 55) zwischen den besagten Teilstücken in der Nähe der besagten Untergruppen (45a, 45b) angeordnet sind, um die auf diese ausgeübten Beanspruchungen zu begrenzen.

12. Schalthebel nach Anspruch 11, **dadurch gekennzeichnet**, daß die Anschlagmitel aus zwei gegenüberliegenden Teilflächen des oberen Teils (18b) des Ansatzstücks (18) und aus zwei Metallstücken (55) bestehen, die in die in den Schaltknauf (12) eingeschnittenen Einkerbungen eingesetzt sind, um die vorgenannten ebenen Flächen zu bilden.

13. Schalthebel nach einem der Ansprüche 1 bis 12, **dadurch gekennzeichnet**, daß der obere Teil (18b) des Ansatzstücks (18) gestuft ist, wobei er aus mehreren aufeinander ausgerichteten Teilstücken mit rechteckigem oder quadratischem Querschnitt besteht, daß gegenüber diesem oberen Teil (18b) des Ansatzstücks (18) die Aussparung (30) des Schaltknaufs (12) einen Abschnitt mit größerem rechteckigem Querschnitt (30a) aufweist, der durch einen zylindrischen Abschnitt (30b) verlängert wird, daß eine Führungsscheibe (34) in die Aussparung (30) des Schaltknaufs eingesetzt ist und an der Schulter (36) anliegt, die zwischen dem besagten zylindrischen Teil (30b) und dem besagten Teil mit rechteckigem Querschnitt (30a) ausgebildet ist, und daß die besagte Führungsscheibe (34) ein mittiges rechteckiges Fenster mit zwei gegenüberliegenden flachen Ansätzen (38) aufweist, die parallel zur Hauptachse der Führungsscheibe (34) umgebogen sind, um den Zwischenraum zwischen den Seitenflächen der Aussparung (30) des Schaltknaufs (12) einerseits und des Ansatzstücks (18) andererseits auszufüllen.

## Claims

1. Gear change lever, notably for a motor vehicle, of the type having a manoeuvring section (11) provided with a knob (12) designed to be actuated by the user, a transmission section (14), swivellingly carrying the manoeuvring section (11) with the facility for de-aligning the manoeuvring section (11) with respect to the transmission section (14), elastic return means (40) in alignment with the said sections (11, 14) and means of detecting a force on the manoeuvring section (11) exerted by the user indicating a desire to manoeuvre it, the said detection means comprising at least two electrical sensors (44) disposed symmetrically with respect to an alignment axis of the said sections and connected to an on-board computer in order to control the operation of a clutch, characterised in that the said sensors (44) are stress sensors (44) of the resistive type known per se, in that the resistances of these sensors (44) are electrically connected in a circuit able to measure the forces applied to the said manoeuvring section (11) in that the said elastic return means include two corresponding blocks of elastically compressible material (40), such as blocks of elastomer, arranged symmetrically with respect to the said axis and each interposed between flat faces formed opposite each other, on the one hand, in a recess (30a) in the knob (12) of the manoeuvring section (11) and, on the other hand, in a connecting piece (18) forming the top end of the transmission section (14) topped by the hollowed-out knob (12), in that the said sensors and the said blocks of elastically compressible material are associated respectively in pairs to form two symmetrical sub-assemblies (45a, 45b), mechanically interposed between the aforementioned plane faces of the said sections (11, 14), and in that the said blocks of elastically compressible material (40) are precompressed at time of assembly, in an identical fashion when the said sections (11, 14) are aligned.

2. Gear change lever according to Claim 1, characterised in that precompression shims (54) are inserted respectively between each aforementioned sub-assembly and one of the aforementioned sections, to produce a predetermined compression of the blocks of elastically compressible material (40).

3. Gear change lever according to Claim 2, characterised in that the precompression shims (54) are inserted between each sub-assembly (45a, 45b) and the internal face of the cavity (30) of the knob (12).

4. Gear change lever according to Claim 3, characterised in that each aforementioned plane face of the recess (30) in the knob is defined in a notch cut out to guide the associated precompression shim (54).

5. Gear change lever according to any one of Claims 1 to 4, characterised in that the aforementioned plane faces of the connecting piece (18) are formed in the top part (18b) of the connecting piece (18) and in that the said top part (18b) is stepped.

6. Gear change lever according to any one of Claims 1 to 5, characterised in that the opposite plane faces of the manoeuvring (11) and transmission (14) sections are inclined.

7. Gear change lever according to one of Claims 1 to 6, characterised in that the said resistive sensors consist of resistive deposits arranged on the same flexible support (48) and in that this support is formed in such a fashion as to surround one of the said sections, for example the upper end of the connecting piece (18) of the transmission section (14), so that the two resistive sensors are symmetrically opposite each other with respect to the axis of this section.

8. Gear change lever according to Claim 7, characterised in that the said flexible support (48) is applied on a rigid support (50) forming a stirrup, itself mounted at the top end of the connecting piece (18) of the said transmission section (14) topped by the hollowed-out knob (12) of the said manoeuvring section.

9. Gear change lever according to Claim 7 or 8, characterised in that the said resistive sensors are electrically connected in series with a common point (56) connected to a connection pin (57) and in that these sensors are connected to an electric cable (26) with three independent conductors, one of the conductors being connected to the said connection pin (57) of the common point, and the other two being respectively connected to connection pins (58a, 58b) of the said resistive sensors.

10. Gear change lever according to Claim 9, characterised in that the aforementioned electric cable (26) is covered by an axial guide tube (24) passing through a tubular shaft (16) having a narrowed top end on which is mounted the connecting piece (18), and in that the end part of the electric cable (26) emerges from the connecting piece (18) in the top part of the recess (30) in the knob (12) where the wires are connected to the said sensors (44).

11. Gear change lever according to one of the preceding claims, characterised in that stop means (18, 55) are arranged between the said sections, in the vicinity of the said sub-assemblies (45a, 45b) to limit the forces applied thereto.

12. Gear change lever according to Claim 11, characterised in that the stop means consist of two opposite facets of the top part (18b) of the connecting piece (18) and by two metal pieces (55) housed in the notches cut out in the knob (12) to define the aforementioned plane faces.

13. Gear change lever according to any one of Claims 1 to 12, characterised in that the top part (18b) of the connecting piece (18) is stepped and is composed of several aligned sections with a rectangular or square cross section, in that, opposite this top part (18b) of the connecting piece (18), the recess (30) in the knob (12) also has a portion with a larger rectangular cross section (30a) extended by a cylindrical portion (30b), in that a guide washer (34) is inserted in the recess (30) in the knob and bears against the shoulder (36) created between the said cylindrical part (30b) and the said part with a rectangular cross section (30a) and in that the said washer (34) has a rectangular central window having two flat opposite lugs (38) folded over parallel to the principal axis of the washer (34) to fill in the space between the lateral surfaces of the recess (30) in the knob (12), on the one hand, and of the connecting piece (18) on the other hand.
